(19) Europäisches Patentamt
European Patent Office
Office européen des brevets

(11) **EP 4 495 840 A1**

(12) **EUROPEAN PATENT APPLICATION**
published in accordance with Art. 153(4) EPC

(43) Date of publication:
**22.01.2025 Bulletin 2025/04**

(21) Application number: **22950200.0**

(22) Date of filing: **05.07.2022**

(51) International Patent Classification (IPC):
**G06N 10/20** (2022.01)

(52) Cooperative Patent Classification (CPC):
**G06N 10/20**

(86) International application number:
**PCT/JP2022/026735**

(87) International publication number:
**WO 2024/009406 (11.01.2024 Gazette 2024/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **QunaSys Inc.**
**Bunkyo-ku**
**Tokyo 113-0001 (JP)**

(72) Inventors:
• **KANNO, Keita**
**Tokyo 113-0001 (JP)**
• **IMAI, Ryosuke**
**Tokyo 113-0001 (JP)**
• **KOHDA, Masaya**
**Tokyo 113-0001 (JP)**
• **NAKAGAWA, Yuya**
**Tokyo 113-0001 (JP)**

(74) Representative: **V.O.**
**P.O. Box 87930**
**2508 DH Den Haag (NL)**

(54) **QUANTUM INFORMATION PROCESSING METHOD, CLASSICAL COMPUTER, HYBRID SYSTEM, AND QUANTUM INFORMATION PROCESSING PROGRAM**

(57) A quantum computer executes quantum measurement plural times based on information related to a quantum circuit structure so as to acquire measurement results of the quantum measurement, and transmits the measurement results to a classical computer. The classical computer receives the measurement results and selects R individual measurement values from the measurement results. The classical computer generates an effective Hamiltonian based on a Hamiltonian H of a system to be computed and on the selected R individual measurement values, and computes a ground state of the Hamiltonian H and a ground state energy of the Hamiltonian H by diagonalizing a matrix representing the effective Hamiltonian.

FIG.1

## Description

Field

Technology disclosed herein relates to a quantum information processing method, a classical computer, a hybrid system, and a quantum information processing program.

Background Art

A variational quantum eigensolver (VQE) is known for executing quantum computation using a noisy intermediate-scale quantum (NISQ) device (see, for example, "A variational eigenvalue solver on a photonic quantum processor" by Peruzzo, A., McClean, J., Shadbolt, P. et al. published in Nat Commun 5, 4213 (2014)).
There is an expectation that problems related to quantum chemistry will be solvable using NISQ devices and VQEs. Note that when a quantum computation is executed using VQE, physical property values such as energy are estimated by computing a sampling mean. However, statistical errors occur in the computation result of the sampling mean. Moreover, noise may also be generated in a quantum computer that is an NISQ device. Furthermore, although a state space (state space is also called search space) is set when using VQE, this state space is limited. This means that errors due to such causes occur in computation results obtained using NISQ devices and VQEs.
However, a method called Selected Configuration Interaction (Selected CI) is known as a computation method using a classical computer (see, for example, "The Configuration Interaction Method: Advances in Highly Correlated Approaches" by C. David Sherrill and Henry F. Schaefer III published in Advances in Quantum Chemistry, Volume 34, 1999, Pages 143-269).
State space is limited with Selected CI, and a ground state and excited states are searched for within the limited state space. In relation to Selected CI, methods of computation using only a classical computer are known, and methods of computing a Selected CI using a quantum computer are not known.

SUMMARY OF INVENTION

Technical Problem

In consideration of the above circumstances, the technology disclosed herein provides a quantum information processing method, a classical computer, a hybrid system, and a quantum information processing program capable of setting state space in Selected CI using a quantum computer while also decreasing errors that possibly occur in quantum computation.

Solution to Problem

In order to achieve the above object, a quantum information processing method of a first aspect of technology disclosed herein is a quantum information processing method for execution by a classical computer in a hybrid system including the classical computer and a quantum computer. Processing of the quantum information processing method includes: the quantum computer executing quantum measurement a plurality of times based on information related to a quantum circuit structure so as to acquire measurement results of the quantum measurement, and the transmitting the measurement results to the classical computer; the classical computer receiving the measurement results and selecting R individual measurement values from the measurement results; and the classical computer generating an effective Hamiltonian based on a Hamiltonian H of a system to be computed and on the selected R individual measurement values, and computing a ground state of the Hamiltonian H and a ground state energy of the Hamiltonian H by diagonalizing a matrix representing the effective Hamiltonian.

Advantageous Effects

The technology disclosed herein exhibits the excellent advantageous effect of being able to set a state space in Selected CI using a quantum computer while also reducing errors that may occur in quantum computation.

BRIEF DESCRIPTION OF DRAWINGS

Fig. 1 is a diagram illustrating an example of a schematic configuration of a hybrid system 100 of an exemplary embodiment.
Fig. 2 is a schematic block diagram of a computer configured to function as a classical computer 110, a control device 121, and a user terminal 130.
Fig. 3 is a diagram illustrating an example of a sequence executed by a hybrid system 100 of a first exemplary embodiment.
Fig. 4 is a diagram illustrating an example of a sequence executed by a hybrid system 100 of a second exemplary embodiment.
Fig. 5 is a diagram illustrating an example of a sequence executed by a hybrid system 100 of a third exemplary embodiment.
Fig. 6 is a diagram illustrating simulation results of an Example.
Fig. 7 is a diagram illustrating simulation results of an Example.
Fig. 8 is a diagram illustrating simulation results of an Example.
Fig. 9 is a diagram illustrating simulation results of an Example.
Fig. 10 is a diagram illustrating simulation results of an Example.

## DESCRIPTION OF EMBODIMENTS

Detailed explanation follows regarding an exemplary embodiment of technology disclosed herein, with reference to the drawings.

Hybrid System 100 According to Exemplary Embodiment

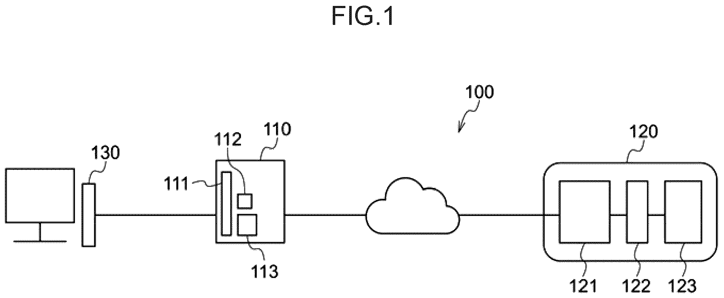

Fig. 1 illustrates a hybrid system 100 according to an exemplary embodiment. The hybrid system 100 of the present exemplary embodiment includes a classical computer 110, a quantum computer 120, and a user terminal 130. As illustrated in Fig. 1, the classical computer 110, the quantum computer 120, and the user terminal 130 are connected together, for example, over a computer network such as an internet protocol (IP) network.

In the hybrid system 100 of the present exemplary embodiment, the quantum computer 120 performs specific quantum computations in response to requests from the classical computer 110, and then outputs the computation results of such quantum computations to the classical computer 110. The classical computer 110 then outputs the computation results for the quantum computations to the user terminal 130. Specific computation processing is accordingly executed by the hybrid system 100 as a whole.

The classical computer 110 includes a communication section 111 such as a communication interface, a processing section 112 such as a central processing unit (CPU), or the like serving as an example of a processor, and an information storage section 113 including a storage device such as memory or a hard disk, or a storage medium, and the classical computer 110 is configured to perform various processing by executing a program. The classical computer 110 may include a server configured by one or plural devices. The program may be one program, or may include plural programs, and may be configured as a non-transitory program product recorded on a computer-readable storage medium.

As an example, based on information transmitted from the classical computer 110, the quantum computer 120 generates an electromagnetic wave for irradiating onto at least one qubit out of a qubit cluster 123. The quantum computer 120 then executes the quantum circuit by irradiating the generated electromagnetic wave onto the at least one qubit out of the qubit cluster 123.

In the example illustrated in Fig. 1, the quantum computer 120 includes a control device 121 to perform communication with the classical computer 110, an electromagnetic wave generation device 122 to generate an electromagnetic wave in response to requests from the control device 121, and the qubit cluster 123 subjected to irradiation of an electromagnetic wave from the electromagnetic wave generation device 122. The electromagnetic wave generation device 122 and the qubit cluster 123 of the quantum computer 120 also configure a quantum processing unit (QPU). Note that in the present exemplary embodiment, the "quantum computer" refers to a computer including at least some computation with qubits, rather than denoting a computer that does not perform any computation using classical bits at all.

The control device 121 is a classical computer that performs computation using classical bits, and performs some or all of the processing that is described in the present specification as being performed by the classical computer 110, on behalf thereof. For example, the control device 121 may in advance be stored with, or determine, a quantum circuit, and generate quantum gate information to execute a quantum circuit $U(\theta)$ on the qubit cluster 123 in response to receipt of a parameter $\theta$ for the quantum circuit $U(\theta)$.

The user terminal 130 is a classical computer that performs computation using classical bits. The user terminal 130 receives information input by a user, and executes processing in response to this information.

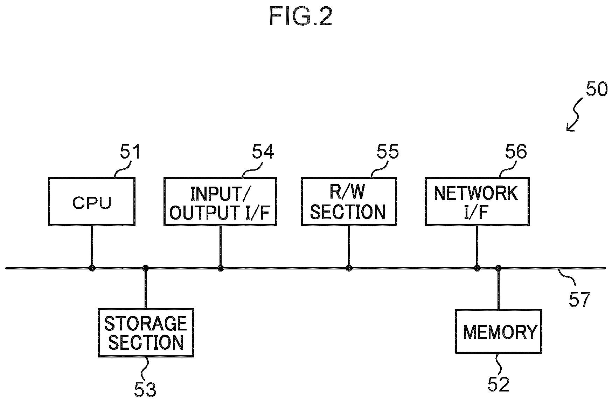

The classical computer 110, the control device 121, and the user terminal 130 may, for example, be implemented by a computer 50, illustrated in Fig. 2. The computer 50 includes a central processing unit (CPU) 51, memory 52 serving as a temporarily storage space, and a non-volatile storage section 53. The computer 50 further includes an input/output interface (I/F) 54 connected to an external device, an output device, or the like, and a read/write (R/W) section 55 that controls the reading and writing of data to a recording medium 59. The computer 50 further includes a network I/F 56 for connection to a network such as the internet. The CPU 51, the memory 52, the storage section 53, the input/output I/F 54, the R/W section 55, and the network I/F 56 are connected together through a bus 57.

The hybrid system 100 of the first exemplary embodiment determines a state space in Selected CI by sampling quantum states.

First Exemplary Embodiment Hybrid System

The hybrid system 100 of the first exemplary embodiment uses the quantum computer 120 to determine the state space in Selected CI, and computes a ground state and a ground state energy of a Hamiltonian H.

First Exemplary Embodiment Hybrid System 100 Operation

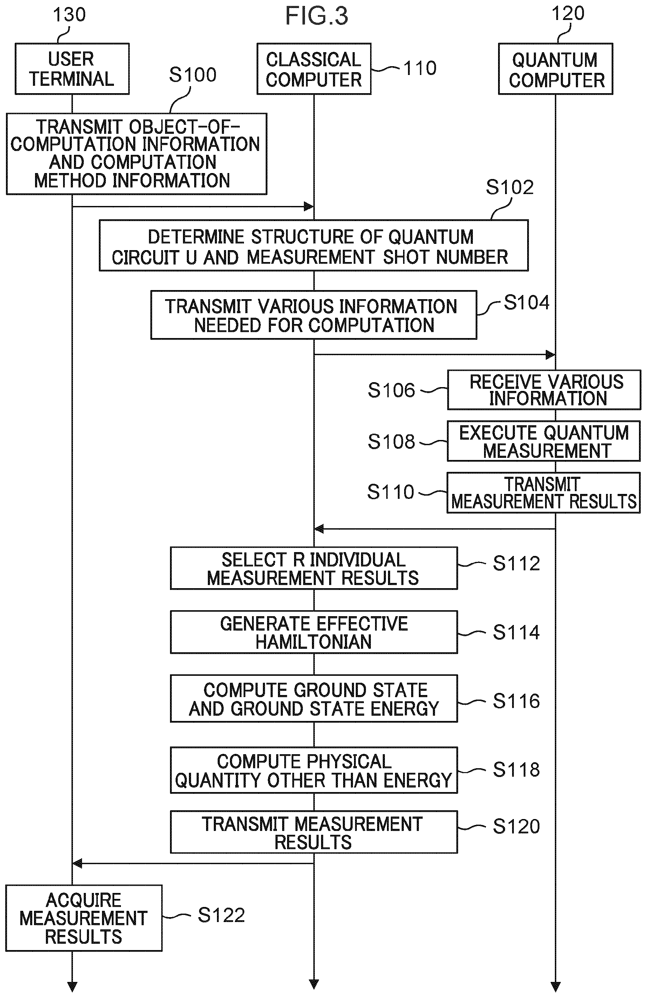

Explanation follows regarding a specific operation of the hybrid system 100 of the first exemplary embodiment. Each processing illustrated in Fig. 3 is executed in a respective device of the hybrid system 100.

First, at step S100, the user terminal 130 transmits object-of-computation information that is information relating to an object-of-computation input by a user and computation method information that is information related to the computation method to the classical computer 110.

A Hamiltonian H corresponding to a system for computation is contained in the object-of-computation information. An operator expressing a physical quantity that characterizes the ground state and a value thereof are contained in the object-of-computation information. For example, in cases in which there is a desire to obtain states for a number of electrons of 2, the object-of-computation information includes an operator $N_e$ to represent the number of electrons, and 2 to express the value thereof. Note that when computing physical quantities other than energy, the object-of-computation information contains an operator set $\{O_i\}$ corresponding to the physical quantities to be computed, wherein i = 1, ..., n.

The computation method information contains, for example, information related to a quantum circuit for preparing states, information related to an initial state, information related to a number of measurement shots $N_{shots}$, and a parameter R to determine a classical computation amount.

Note that quantum state preparation may be performed utilizing various methods. Examples that may be given thereof include, for example, quantum state preparation by VQE, quantum state preparation by a method of optimization by classical computation, quantum state preparation for a case in which an exact solution is obtained by classical computation, and quantum state preparation utilizing a quantum circuit able to be configured merely from information such as a Hamiltonian or the like (adiabatic state preparation or imaginary time evolution).

Next, at step S102, the classical computer 110 receives the object-of-computation information and the computation method information transmitted from the user terminal 130. Then at step S102, the classical computer 110 determines a structure of a quantum circuit based on the information related to a structure of a quantum circuit U from out of the computation method information. Moreover, at step S102, the classical computer 110 determines a quantum initial state based on the information related to the initial state in the computation method information. Moreover, at step S102, the classical computer 110 determines a number of measurement shots based on the information related to the measurement shot number in the computation method information.

At step S104, the classical computer 110 transmits various information needed for quantum computation to the quantum computer 120. More specifically, the classical computer 110 transmits, to the quantum computer 120, the quantum circuit structure, initial state, and measurement shot number determined at step S102, and the computation method information and other object-of-computation information received at step S102.

At step S106, the control device 121 transmits the various information transmitted from the classical computer 110 at step S104.

At step S108, the control device 121 executes quantum computation in the quantum computer 120 according to various information received at step S106. The quantum computer 120 acquires a measurement result by executing quantum measurement plural times based on the information related to the quantum circuit structure according to control by the control device 121. The quantum measurement is sampling of a quantum state $| \psi >$ by projection measurement repeatedly performed on a given ground that is a quantum state (for example a computation ground in the quantum computer 120). The sampling is quantum measurement repeatedly performed $N_{shots}$ times on the quantum state $| \psi >$. Note that in the computation ground, $2^N$ results are obtained for $| 000... 0 >$ to $| 111...1 >$ for each measurement, wherein N is the qubit number.

Specifically, under control by the control device 121, the quantum computer 120 generates an electromagnetic wave for irradiating onto at least one qubit out of the qubit cluster 123. The quantum computer 120 then subjects the at least one qubit out of the qubit cluster 123 to irradiation by the generated electromagnetic wave so as to execute a quantum circuit for generating the quantum state $| \psi >$. Gate operations of quantum gates in the quantum circuit are converted into corresponding electromagnetic waveforms, and the generated electromagnetic wave is irradiated on the qubit cluster 123 by the electromagnetic wave generation device 122. The quantum computer 120 then outputs the measurement results obtained by this measurement. Note that although in the present exemplary embodiment a description has been given of a case in which a quantum circuit is executed by irradiation of an electromagnetic wave, there is no limitation thereto, and a quantum circuit may be executed by a different method.

At step S110, the control device 121 transmits the measurement results obtained at step S108 to the classical computer 110.

At step S112, the classical computer 110 receives measurement results transmitted from the control device 121 at step S110. Next, the classical computer 110 selects R individual measurement values from out of the measurement results. Note that when selecting the R individual measurement values the classical computer 110 may, for example, select the R individual measurement values with a largest number of appearances in the measurement results, or may selects the R individual measurement values that have a number of appearances of a specific value or greater. Moreover when selecting the R individual measurement values the classical computer 110 may, for example, detect errors contained in the measurement results, and select R individual measurement values in sequence from the highest frequency from out of measurement values for which no error was detected.

For example consider a case in which the measurement results are as follows for a case of $N_{shots}$ = 10.

| 001 >: 6 times
| 100 >: 2 times
| 011 >: 1 time
| 000 >: 1 time

In cases in which R = 2 above, the highest ranking 2 individual results of {| 001 >, | 100 >} are selected.

Generally, given a few quantum states, then a space can be determined so as to contain all superpositions thereof. In the present exemplary embodiment, a search space $H_R$ is set from the R individual quantum states referred to above.

In cases in which R = 2 as stated above, a set of states representing the search space $H_R$ may be expressed by the following equation | φ >. Note that a and b are complex numbers satisfying a normalization condition $|a|^2 + |b|^2 = 1$.

$$| \varphi > a| 001 > + b| 100 >$$

At step S114, the classical computer 110 uses a known Selected CI method to generate an effective Hamiltonian based on the Hamiltonian H of the system for computation received at step S102 and on the R individual measurement values selected at step S112. Note that when doing so, in cases in which the ground state to be found is characterized by a physical quantity, the classical computer 110 may be configured so as to generate the effective Hamiltonian after adding a specific penalty term to the Hamiltonian H.

For example, in cases in which there is a desire to obtain the state with the lowest energy from out of states having a number of electrons of 2, then the effective Hamiltonian is generated by utilizing the operator $N_e$ expressing the number of electrons after adding an operator $(N_e - 2)^2$ to the Hamiltonian. Thereby a state such as $< N_e > = 2$ is obtained as a state so as to minimize the expected value of the Hamiltonian.

At step S116, the classical computer 110 employs a known Selected CI method to compute the ground state of the Hamiltonian H and the ground state energy of the Hamiltonian H by diagonalizing a matrix representing the effective Hamiltonian generated at step S114. The eigen vector obtained by diagonalizing the matrix representing the effective Hamiltonian represents the ground state, and the eigen value obtained represents the ground state energy.

Note that in cases in which the expected value of a physical quantity other than energy is to be computed, the following computation is executed at the following step S118.

At step S118, the classical computer 110 generates an effective operator for each of the operators $O_1$, ..., $O_n$ using a known method based on the results of diagonalizing the matrix representing the effective Hamiltonian generated at step S114. Then at step S118, the classical computer 110 computes expected values $< O_1 >$, ..., $< O_n >$ of the ground state based on the effective operator for each of the respective operators $O_1$, ..., $O_n$.

At step S120, the classical computer 110 transmits the computation results obtained at step S116 and step S118 to the user terminal 130.

At step S122, the user terminal 130 receives the computation results transmitted from the classical computer 110.

As described above, the quantum computer in the hybrid system of the first exemplary embodiment acquires measurement results of quantum measurement resulting from executing quantum measurement plural times based on the information related to the quantum circuit structure, and transmits these measurement results to the classical computer. The classical computer receives the measurement results, and selects either the R individual measurement values with a largest number of appearances from out of the measurement results, or the R individual measurement values having a number of appearances of a specific value or greater. The classical computer then generates an effective Hamiltonian based on the Hamiltonian H of the system to be computed and on the R individual measurement values that were selected. Then the classical computer computes the ground state of the Hamiltonian H and the ground state energy of the Hamiltonian H by diagonalizing the matrix representing the effective Hamiltonian. Thus when the Selected CI is executed using the quantum computer, the state space in Selected CI can be set while reducing errors that might occur in the quantum computation.

More specifically, in the hybrid system of the first exemplary embodiment, when the quantum computer is employed to execute the Selected CI, the R individual measurement values are selected while considering those with few errors generated from out of the measurement results obtained by the quantum computer, and employing these R individual measurement values to execute the Selected CI enables the state space in Selected CI to be set while reducing errors that might occur in the quantum computation.

Moreover, assigning appropriate roles between the classical computer and the quantum computer enables the state space in Selected CI to be set while reducing errors that might occur in the quantum computation.

Second Exemplary Embodiment Hybrid System

Next, explanation follows regarding a second exemplary embodiment. Since configuration of a hybrid system according to the second exemplary embodiment is similar to the configuration of the first exemplary embodiment, the same reference numerals are appended thereto and explanation thereof is omitted.

The hybrid system 100 of the second exemplary embodiment uses the quantum computer 120 to determine the state space in Selected CI and to compute the excited states and the excited states energies of the Hamiltonian H. The hybrid system 100 of the second exemplary embodiment prepares a quantum state approximating to an excited state instead of the ground state for use in a quantum circuit.

Second Exemplary Embodiment Hybrid System 100: Operation

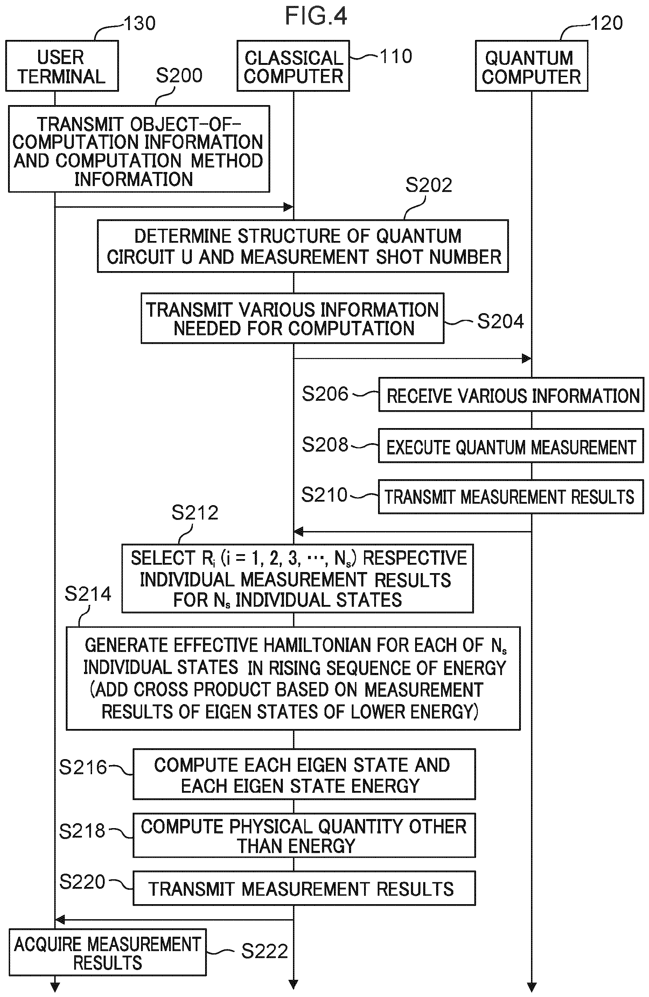

Next, explanation follows regarding specific operation of the hybrid system 100 of the second exemplary embodiment. The respective devices configuring the hybrid system 100 execute the various processing illustrated in Fig. 4.

First, at step S200, the user terminal 130 transmits, to the classical computer 110, the object-of-computation information that is information related to the computation target input by a user, and the computation method information that is information related to the computation method.

The Hamiltonian H corresponding to the system to be computed is contained in the object-of-computation information. An operator representing a physical quantity characterizing the ground state, and a value thereof, are contained in the object-of-computation information. For example, in cases in which there is a desire to obtain a state for a number of electrons of 2, then the object-of-computation information contains an operator $N_e$ expressing the number of electrons and 2 representing the value thereof. Note that when computing a physical quantity other than energy, the object-of-computation information contains a set with a combination of an operator and state corresponding to the physical quantity for computation. A set with a combination of the operator and state corresponding to the physical quantity for computation is represented by $\{s_k, t_k, O_k\}$, wherein k = 1, ..., n. Regarding k herein, $s_k$ and $t_k$ represent $k^{th}$ lowest energy states. Note that a transition amplitude $< s_k | O_k | t_k >$ is computed as a quantity other than energy. For example, when $s_k = t_k$, the computation result is an expected value for the state $s_k$ for the physical quantity $O_k$.

The computation method information contains, for example, information related to a preparation quantum circuit for preparing each of the $N_s$ individual states, information related to an initial state of the $N_s$ individual states, information related to the number of measurement shots for each of the $N_s$ individual states, and parameters $R_i$ (wherein i = 1, ..., $N_s$) determining a classical computation quantity for each of the $N_s$ individual states.

At step S202, the classical computer 110 receives the object-of-computation information and the computation method information transmitted from the user terminal 130. Then at step S202, the classical computer 110 determines a quantum circuit structure for each of the $N_s$ individual states based on the information related to the structure of the quantum circuit U in the computation method information. Moreover at step S202, the classical computer 110 determines the initial state of a quantum for each of the $N_s$ individual states based on the information related to the initial states in the computation method information. Moreover, at step S202, the classical computer 110 determines a number of measurement shots for each of the $N_s$ individual states based on the information related to the measurement shot number in the computation method information.

At step S204, the classical computer 110 transmits various information needed for quantum computation to the quantum computer 120. More specifically, the classical computer 110 transmits, to the quantum computer 120, information related to a quantum circuit structure for each of the $N_s$ individual states, the initial state for each of the $N_s$ individual states, and the measurement shot number for each of the $N_s$ individual states, which were determined at step S202, and transmits the computation method information and other object-of-computation information received at step S202.

At step S206, the control device 121 receives various information transmitted from the classical computer 110 at step S204.

At step S208, the control device 121 causes quantum computation to be executed by the quantum computer 120 according to the various information received at step S206. Under control from the control device 121, the quantum computer 120 executes quantum measurement plural times for each of the $N_s$ individual states based on the information related to the quantum circuit structure of each of the $N_s$ individual states so as to acquire these measurement results. The quantum measurement is repeated plural times for each of the $N_s$ individual states.

At step S210, the control device 121 transmits the measurement results obtained at step S208 to the classical computer 110.

At step S212, the classical computer 110 receives the measurement results transmitted from the control device 121 at step S210. Next, the classical computer 110 selects $R_i$ (wherein i = 1, ..., $N_s$) individual measurement values for each of the $N_s$ individual states from the measurement result corresponding to these states.

At step S214, the classical computer 110 uses a known Selected CI method to generate an effective Hamiltonian $H_i$ (wherein i = 1, ..., $N_s$) for each of the $N_s$ individual states based on the Hamiltonian H of the system for computation received at step S202 and on the $R_i$ individual measurement values for each of the $N_s$ individual states as selected at step S212. When this is performed, when the desired eigen state to be found is characterized by a physical quantity, the classical computer 110 may generate the effective Hamiltonian after adding a specific penalty term to the Hamiltonian H.

At step S216, the classical computer 110 uses a known Selected CI method to compute the $i^{th}$ eigen state of the Hamiltonian H and the $i^{th}$ eigen state energy of the Hamiltonian H for each of the $N_s$ individual states by diagonalizing the matrix representing the effective Hamiltonian $H_i$ (wherein i = 1, ..., $N_s$) for each of the $N_s$ individual states generated at step S214.

The classical computer 110 takes only states orthogonal to the state approximating to the ground state obtained before as states to be searched. The states orthogonal to the ground state (namely states having an inner product thereto of 0) are obtained by adding $| \psi_0 | \psi >|^2$ to the energy for computation for a case in which the ground state is $| y_0 >$ and a state being searched is $| \psi >$. For example, to find an $i^{th}$ excited state, squares of the absolute values of the inner products up to the i-1$^{th}$ excited state are also added to the energy.

More specifically, $\alpha_0 | \psi_0 | \psi >|^2 + ... + \alpha_{i-1} | \psi_{i-1} | \psi >|^2$ is added to the energy in a cases in which the (i-1)$^{th}$ state already obtained is $| \psi_0 >, ..., | \psi_{i-1} >$. Note that $\alpha_o, ..., \alpha_{i-1}$ are appropriate coefficients settable in advance. Note that no problem is presented by the space to be searched differing for the ground states and the excited states. Such an implementation is performed by adding to the effective Hamiltonian $H_i$ cross products $\alpha_0 | \psi_0 > <\psi_0 | +, ..., + \alpha_{i-1} | \psi_{i-1} > < \psi_{i-1}|$ between eigen states up to the i-1$^{th}$ eigen state, wherein the eigen states up to the i-1$^{th}$ eigen state are $| \psi_0 >, ..., | \psi_{i-1} >$. Note that $\alpha_0, ..., \alpha_{i-1}$ are appropriate coefficients settable in advance.

Note that in cases in which an expected value of a physical quantity other than energy is to be computed, computation of the expected value of the physical quantity other than energy is executed at step S218. Transition amplitudes between the ground state and the excited states, and transition amplitudes between the plural excited states, can be computed by utilizing the ground state and the excited states. Thus a quantity represented by the expression $< \psi| O | \varphi >$ can be computed, wherein states are $| \psi >, | \varphi >$ and an operator to represent an observed quantity is O.

At step S218, the classical computer 110 employs a known method to generate an effective operator for each of the operators $O_1, ..., O_n$ based on the results of diagonalizing the matrix representing the effective Hamiltonian generated at step S214. At step S218, the classical computer 110 computes transition amplitudes $< s_{k|} O_{k|} t_k >\}$ wherein k = 1, ..., n computed by combining an $s_k^{th}$ eigen state with a $t_k^{th}$ eigen state based on the effective operators for each of the operators $O_1, ..., O_n$.

At step S220, the classical computer 110 transmits the measurement results obtained at step S216 and step S218 to the user terminal 130.

At step S222, the user terminal 130 receives the measurement results transmitted from the classical computer 110.

As described above, the quantum computer in the hybrid system of the second exemplary embodiment acquires the measurement result of quantum measurement resulting from executing quantum measurement plural times for each of the $N_s$ individual states, and transmits the measurement results for each of the $N_s$ individual states to the classical computer. The classical computer receives the measurement results for each of the $N_s$ individual states, and selects $R_i$ (i = 1, ..., $N_s$) individual measurement values from the measurement results for each of the $N_s$ individual states. The classical computer generates an effective Hamiltonian for each of the $N_s$ individual states based on the Hamiltonian H of the system to be computed and based on the selected $R_i$ individual measurement values, and computes the $i^{th}$ eigen state of the Hamiltonian H and the $i^{th}$ eigen state energy of the Hamiltonian H by diagonalizing the matrix representing the effective Hamiltonian. This thereby enables Selected CI to be executed using a quantum computer while reducing errors that might occur in the quantum computation. Furthermore, the excited states and the excited state energies can be obtained by executing the Selected CI using the quantum computer.

Third Exemplary Embodiment Hybrid System

Next description follows regarding a third exemplary embodiment. Note that the configuration of the hybrid system according to the third exemplary embodiment is similar to the configuration of the first exemplary embodiment, and so the same reference numerals will be appended thereto and explanation thereof will be omitted.

A hybrid system 100 of the third exemplary embodiment uses a quantum computer 120 to determine state space in Selected CI and to compute excited states and excited state energies of a Hamiltonian H.

Suppose that a user wishes to find the ground state of the Hamiltonian H and $N_s$ - 1 individual excited states of the Hamiltonian H. In order address such a case, the hybrid system 100 of the third exemplary embodiment employs a quantum circuit to prepare M individual quantum states $\psi_i >$ (wherein i = 1, ..., M), and performs sampling on these M individual quantum states $\psi_i >$ (wherein i = 1, ..., M) using the quantum computer 120.

The hybrid system 100 of the third exemplary embodiment then selects R individual measurement values from the measurement results that result from sampling, and sets a search space $H_R$ corresponding to the R individual measurement values.

Note that it is most natural to set M = $N_s$, and to prepare M = $N_s$ individual states approximating to the desired $N_s$ individual quantum states. However, as an extreme example, even when 3 excited states ($N_s$ = 4) are desired, then there is still a chance that the states for sampling only include the state approximating to the ground state (M = 1).

In order to address this issue, the hybrid system 100 of the third exemplary embodiment generates an effective Hamiltonian in the search space $H_R$ corresponding to the R individual measurement values. The hybrid system 100 of the third exemplary embodiment diagonalizes the effective Hamiltonian and acquires $N_s$ individual eigen values in sequence from the smallest eigen value. These $N_s$ individual eigen values express the ground state energy and the excited states energies, and the corresponding eigen vectors express the ground state and the excited states. This means that a common search space for the processing executed by the hybrid system 100 of the third exemplary embodiment is configured by combining sampling results of M individual states, and this is a point of difference to the second exemplary embodiment. A specific description follows thereof.

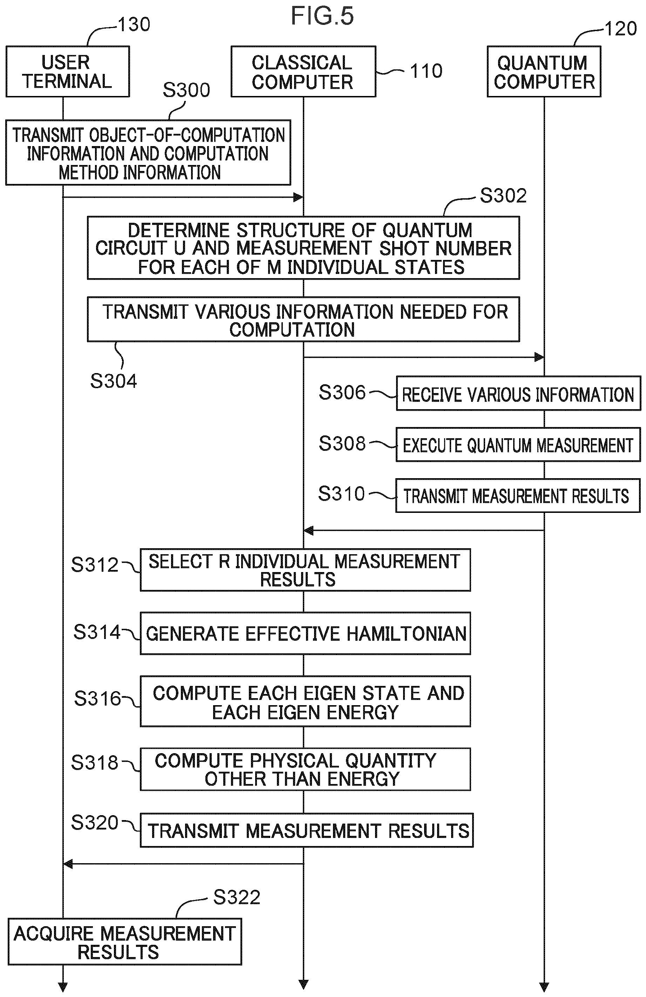

Third Exemplary Embodiment Hybrid System 100 Operation Description follows regarding a specific operation of the hybrid system 100 of the third exemplary embodiment. Each processing illustrated in Fig. 5 is executed in the respective devices of the hybrid system 100.

First, at step S300 the user terminal 130 transmits, to the classical computer 110, object-of-computation information that is information related to the object of computation input by a user, and computation method information that is information related to the computation method.

The object-of-computation information contains the Hamiltonian H corresponding to the system to be computed and the number of states $N_s$ to be computed. The object-of-computation information also contains an operator expressing a physical quantity characterizing the ground state and excited states, and the value thereof. For example, in cases in which there is a desire to obtain states for a number of electrons of 2, then the object-of-computation information contains the operator $N_e$ expressing the number of electrons and 2 expressing the value thereof.

Note that in cases in which a physical quantity other than energy is to be computed, the object-of-computation information contains a set of a combination of operators corresponding to the physical quantities to be computed and states thereof. A set of a combination of operators corresponding to the physical quantity and the states is expressed by $\{s_k, t_k, O_k\}$ k = 1, ..., n. Moreover, $s_k$ and $t_k$ represent the states of the $k^{th}$ lowest ranked energies for each k. Note that a transition amplitude < $s_k| O_k |tk >$ is computed as a quality different from energy. For example, in cases in which $s_k = t_k$, the computation result is an expected value for the state $s_k$ for the physical quantity $O_k$.

The computation method information contains, for example, information related to a preparation quantum circuit for preparing each of the M individual states, information related to the initial state for each of the M individual states, information related to the number of measurement shots for each of the M individual states, a parameter R for determining a classical computation quantity, and the like.

At step S302, the classical computer 110 receives the object-of-computation information and computation method information transmitted from the user terminal 130. Then at step S302, the classical computer 110 determines a structure of a quantum circuit for each of the M individual states based on the information related to the structure of a quantum circuit U from out of the computation method information.

Moreover at step S302, the classical computer 110 determines the initial state of the quantum for each of the M individual states based on the information related to the initial state in the computation method information. Moreover, at step S302, the classical computer 110 determines the number of measurement shots for each of the M individual states based on the information related to the number of measurement shots in the computation method information.

At step S304, the classical computer 110 transmits various information needed for quantum computation to the quantum computer 120. More specifically, the classical computer 110 transmits, to the quantum computer 120, the information related to the structure of the quantum circuit for each of the M individual states, the initial state for each of the M individual states, and the number of measurement shots for each of the M individual states that were determined at step S302, and the computation method information and other object-of-computation information that was received at step S302.

At step S306, the control device 121 receives from the classical computer 110 the various information that was transmitted at step S304.

At step S308, the control device 121 executes quantum computation in the quantum computer 120 according to the various information received at step S306. Under control by the control device 121, the quantum computer 120 executes quantum measurement plural times for each of the M individual states based on the information related to the quantum circuit structure of each of the M individual states acquires the measurement result. The quantum measurement is repeated plural times for each of the M individual states.

At step S310 the control device 121 transmits the measurement result obtained at step S308 to the classical computer 110.

At step S312, the classical computer 110 receives the measurement results transmitted from the control device 121 at step S310. Next at step S312, the classical computer 110 selects the R individual measurement values from the measurement results obtained for each of the M individual states.

At step S314, the classical computer 110 employs a known Selected CI method to generate an effective Hamiltonian based on the Hamiltonian H of the system for computation received at step S302 and on the R individual measurement values selected at step S312. Note that when doing so, when the desired eigen state is characterized by a physical quantity, the classical computer 110 may be configured so as to generate the effective Hamiltonian after adding a specific penalty term to the Hamiltonian H.

At step S316, the classical computer 110 employs the known Selected CI method to diagonalize the matrix representing the effective Hamiltonian generated at step S314 so as to compute the 1st to the $N_s^{th}$ eigen states of the Hamiltonian H and the 1st to the $N_s^{th}$ eigen state energies of the Hamiltonian H.

Note that when computing the expected value of a physical quantity other than energy, the following computation is executed at the following step S318.

At step S318, the classical computer 110 employs a known method to generate an effective operator for each of the operators $O_1$, ..., $O_n$ based on the result of diagonalizing the matrix representing the effective Hamiltonian generated at step S314. Then at step S318, the classical computer 110 computes a transition amplitude < $s_k \mid O_k \mid t_k$ > }, wherein k = 1, ..., n computed from a combination of the $s_k^{th}$ eigen state with the $t_k^{th}$ eigen state based on the effective operator for each of the operators $O_1$, ..., $O_n$.

At step S320, the classical computer 110 transmits the computation results obtained at step S316 and step S318 to the user terminal 130.

At step S322 the user terminal 130 receives the computation results transmitted from the classical computer 110.

As described above, the quantum computer of the hybrid system of the third exemplary embodiment acquires the measurement results of the quantum measurement resulting from executing quantum measurement plural times for each of the M individual states, and transmits the measurement results for each of the M individual states to the classical computer. The classical computer receives the measurement results for each of the M individual states and selects R individual measurement values from these measurement results. The classical computer generates an effective Hamiltonian based on the Hamiltonian H of the system to be computed and the selected R individual measurement values, and computes the 1st to the $N_s^{th}$ eigen states of the Hamiltonian H and the 1st to the $N_s^{th}$ eigen state energies of the Hamiltonian H by diagonalizing the matrix representing the effective Hamiltonian. This thereby enables the quantum computer to be employed to execute Selected CI while reducing errors that might occur in the quantum computation. Furthermore, the ground state, the excited states, the ground state energy, and the excited state energies can be obtained by executing the Selected CI using the quantum computer.

Moreover, description follows regarding the superiority of the proposed method described in each of the exemplary embodiments described above.

In cases in which a hitherto known VQE is utilized, the following four types of computation error occur.

(1) Error due to search space limitations

With VQE, an ansatz is proposed for states, and a search range is limited for searching states within such a range. This with VQE states are obtained that are different to the true ground state or excited states.

(2) Error due to insufficient optimization

With VQE, when searching for states, errors occur in the physical values such as the obtained states, energies, or the like in cases in which such searching is insufficient or there is insufficient accuracy in the searching.

(3) Errors due to noise of an actual quantum computer

Errors occur in current quantum computers in the operation and measurement itself. Errors accordingly also occur in the results obtained.

(4) Statistical errors due to quantum measurement

In cases in which energies are computed by VQE, the energies are obtained as sampling means, and so naturally statistical errors occur therein.

In contrast thereto, in the proposed method of the present exemplary embodiment, as described below, the above described errors that occur with VQE can be reduced.

More specifically, the proposed method of the present exemplary embodiment has none of the limitations imposed by the ansatz on the search space employed with VQE. Note that the search space is limited in the proposed method of the present exemplary embodiment by R instead of being limited by the ansatz. Thus by setting R sufficiently large, the limitations in search space due to R can be made smaller than the limitations in search space due to the ansatz.

Moreover, in the proposed method of the present exemplary embodiment, "exact diagonalization" is employed as the search method. In "exact diagonalization" there is an algorithm that is assured to obtain an optimum solution. This means that a state of insufficient optimization can be prevented from arising by employing a search method such as the proposed method of the present exemplary embodiment.

Noise generated in an actual quantum computer occurs in the sampling results for states. However, erroneous sampling results can be removed by utilizing the properties of the problem to be solved. For example, consider a case in which there are 3 electron orbits, in which a state with no electron present is represented by 0 and a state in which there is an electron present is represented by 1. If the number of electrons is known to be 1, then the states the possible states should be any one of | 100 >, | 010 >, | 001 >. However, there are sometimes cases in which | 100 > is measured as | 101 > due to measurement error in the quantum computer. The number of electrons is not correct, and so the occurrence of an error can be determined and removed from the sampling results. This means that the classical computer is able to detect errors occurring in the measurement results obtained by the quantum computer based on the properties of the problem to be computed, enabling such errors to be excluded from the measurement results obtained by the quantum computer when these errors have been detected.

Statistical errors are generated with respect to the search space $H_R$ that is the sampling result. The effect of these errors can be demonstrated by the following Examples to be an order of magnitude smaller than cases in which the energy or the like is obtained as a direct sampling mean.

Examples

Next description follows regarding Examples. In the present Examples, numerical comparison results are illustrated between the proposed method of the present exemplary embodiment and a conventional method. Note that the method of the present exemplary embodiment may also be called quantum-selected configuration interaction (QSCI) as it may be said to be a Sampling CI Method based on results of quantum computing. This means that in the results indicated below, the proposed method of the present exemplary embodiment is sometimes simply referred to as QSCI.

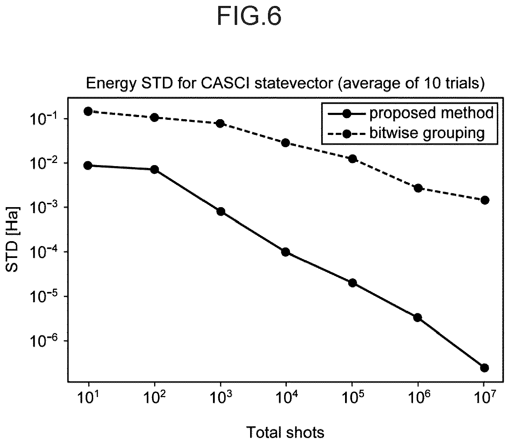

Fig. 6 is a diagram illustrating statistical errors in energies of a given molecular system obtained by a conventional method (denoted as bitwise grouping in Fig. 6) and by the proposed method (denoted as proposed method in Fig. 6). Bitwise grouping is a general method to reduce statistical errors occurring when VQE is employed. The following cited documents should be referenced, for example, in relation to bitwise grouping.

"Measurement optimization in the variational quantum eigensolver using a minimum clique cover" by Vladyslav Verteletskyi, Tzu-Ching Yen, and Artur F. Izmaylov, published in J. Chem. Phys. 152, 124114 (2020), <https://aip.scitation.org/doi/10.1063/1.5141458>.

The results illustrated in Fig. 6 show evaluations of statistical errors occurring when performing energy estimation based on sampling results for exact ground states (CASCI states) of a Hamiltonian. More specifically, performing sampling on the exact ground state of the Hamiltonian (denoted CASCI statevector in Fig. 6), and applying the proposed method to compute the energy of the ground state. The statistical errors when doing so are plotted on the vertical axis of the graph of Fig. 6. When estimating the statistical error, energy estimation using the proposed method is repeated independently 10 times (10 trials), and the standard deviation (STD) of the 10 individual energy estimated values obtained thereby is taken as a statistical error. Note that a statistical error is also estimated similarly in relation to bitwise grouping that is a conventional method. Thus the vertical axis STD [Ha] of the graph of Fig. 6 shows the standard deviation in the results estimating the energy 10 times independently, and is used to estimate the statistical error. The horizontal axis of the graph of Fig. 6 indicates a total number of measurement shots and is equivalent to the number of times of preparing the quantum state. Note that Fig. 6 is a graph illustrating results of numerical simulations on the first exemplary embodiment (estimations of the ground state and the energy thereof).

It is apparent from reference to Fig. 6 that there is a diminishing statistical error as the number of times preparing the quantum state (total shots) is increased in both the conventional method and the proposed method. However, it is apparent that the statistical error is smaller, and the speed with which the error decreases is faster when the number of shots is increased for the proposed method than for the conventional method.

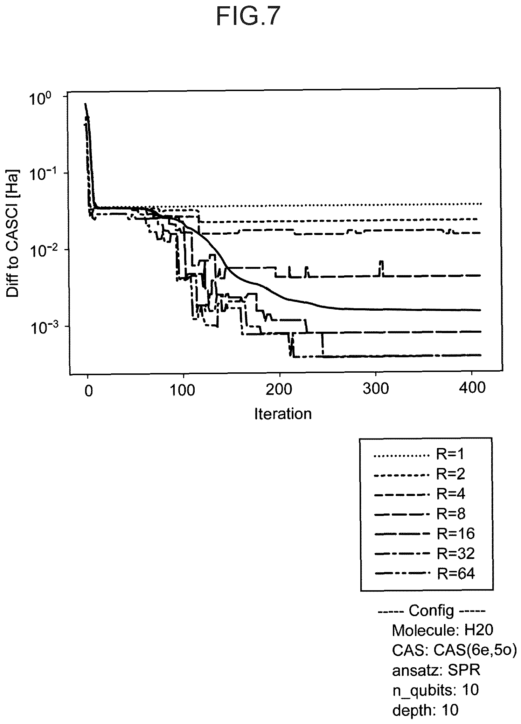

Fig. 7 is a diagram illustrating a computation result of states obtained by VQE (denoted with a solid line in Fig. 7) and computation results when the proposed method of the present exemplary embodiment is used with different R to executed the states for each iteration obtained by VQE (denoted by each type of broken line in Fig. 7).

"Config" in Fig. 7 shows the various conditions of the numerical computation. "Molecule" is a molecule to be computed, and H2O indicates a water molecule. "CAS" indicates Complete-Active-Space, and CAS (6e, 5o) indicates the number of electrons (6) and the number of orbits (5) of active space. "ansatz" indicates a type of trial state employed by VQE, and SPR indicates symmetry preserving real ansatz (a symmetry preserving ansatz with $R_z$ rotation excluded). "n_qibit" is the number of qubits and "depth" is a depth of quantum circuit. Moreover, Diff to CASCI[Ha] on the vertical axis of the graph of Fig. 7 indicates an energy difference between a solution obtained by Complete-Active-Space Configuration Interaction: CASCI and each type of computation result. The horizontal axis of the graph of Fig. 7 indicates the number of repetitions of an optimization step in the VQE. In the present Example a solution obtained by the CASCI method is taken as being an exact solution.

With reference to Fig. 7, it is apparent that a lower energy (namely, a more accurate energy) is obtained than the energy obtained by VQE (indicated by the solid line in Fig. 7) by setting R sufficiently large when using the proposed method of the present exemplary embodiment.

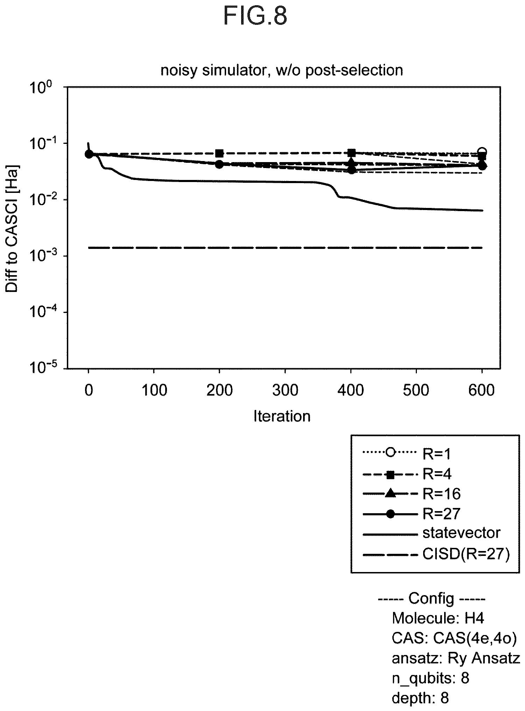

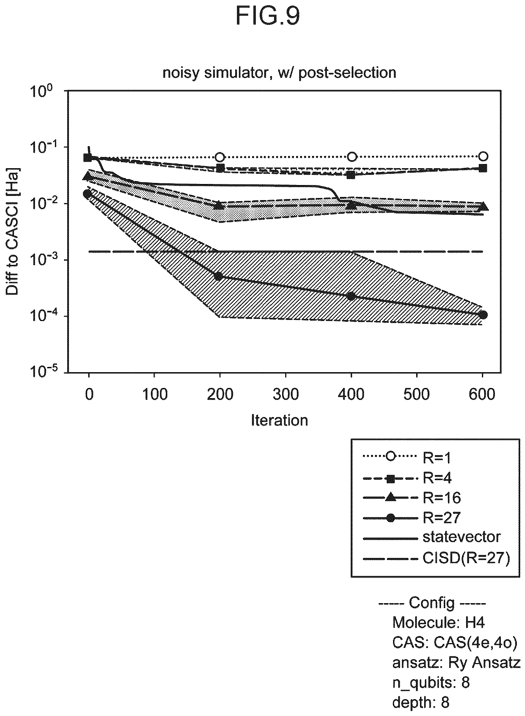

Fig. 8 and Fig. 9 illustrate computation results when a simulation is performed that considers noise arising by an actual quantum computer. The vertical axis of the graphs in Fig. 8 and Fig. 9 indicate a difference between an exact solution and each type of computation result. The horizontal axis of the graphs in Fig. 8 and Fig. 9 indicate a number of repetitions of optimization step in the VQE.

Note that Molecule: H4 in Fig. 8 and Fig. 9 indicates a one-dimensional hydrogen chain $H_4$. State vector indicates a result of VQE based on exact expected value computation. Ry Ansatz indicates a quantum circuit provided with a Ry rotation gate. Configuration-Interaction Singles and Doubles: CISD is a known classical method. In relation to CISD see, for example, <https://gaussian.com/cid/>.

The results of Fig. 9 indicates computation results for cases in which a classical computer detects errors arising in measurement results of quantum measurement based on a property of the problem to be computed (for example the number of electrons in the computation), with any errors excluded from these measurement results. A shaded portion in Fig. 9 indicates a range including results for 10 times of simulation. However, the results of Fig. 8 indicate computation results in cases in which errors have not been removed from the measurement results.

It is apparent by comparing Fig. 8 with Fig. 9 that there is a large improvement in results by performing processing to remove errors arising in the measurement results of quantum measurement according to the property of the problem to be computed. In particular, it is apparent that good results are obtained in cases in which errors are removed from measurement results at substantially similar computation cost to CISD.

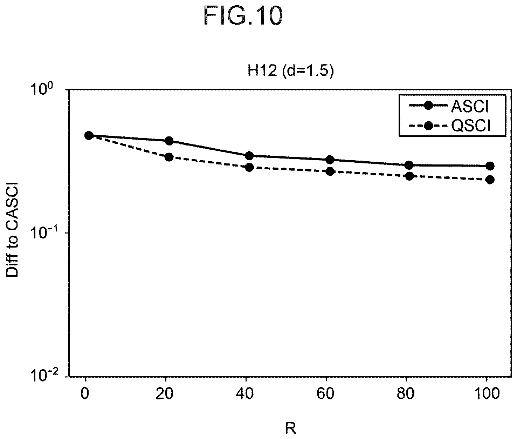

Fig. 10 indicates a result of performing a comparison of a classical method called Adaptive Sampling Configuration Interaction: ASCI against the proposed method. In relation to ASCI see, for example, the following cited document.

"Modern Approaches to Exact Diagonalization and Selected Configuration Interaction with the Adaptive Sampling CI Method" by Norm M. Tubman, C. Daniel Freeman, Daniel S. Levine, Diptarka Hait, Martin Head-Gordon, and K. Birgitta Whaley published in J. Chem. Theory Comput. 2020, 16, 4, 2139-2159, Publication Date: March 11, 2020 <https://pubs.acs.org/doi/10.1021/acs.jctc.8b00536>.

The vertical axis of the graph illustrated in Fig. 10 indicates the difference in energy between each type of computation result and the exact solution. The horizontal axis of the graph illustrated in Fig. 10 indicates the individual number R of selected measurement values. Moreover, H12 (d = 1.5) in the graph illustrated in Fig. 10 indicates a one-dimensional hydrogen chain $H_{12}$ (interatomic distance: 1.5 Å).

There are various parameters in an ASCI method, and although a tradeoff is settable between accuracy and computation cost by adjusting these parameters, as illustrated in the graph of Fig. 10, it is apparent that the proposed method (QSCI) of the present exemplary embodiment is superior to the ASCI method under fixed conditions.

Note that the technology disclosed herein is not limited to the exemplary embodiments described above, and various modifications and applications are possible within a range not departing from the spirit in this invention.

For example, in the exemplary embodiment described above, information may be exchanged in any manner between the classical computer 110 and the quantum computer 120. For example, the exchange of quantum circuit parameters, the exchange of measurement results, and the like between the classical computer 110 and the quantum computer 120 may be performed by successive exchanges performed each time a specific computation is completed, or may be performed by exchange after all computations have been completed.

Moreover, in the exemplary embodiment described above, explanation has been given regarding an example in which object-of-computation information is transmitted from the user terminal 130 to the classical computer 110, and the classical computer 110 executes computations according to the object-of-computation information. However, there is no limitation thereto. The user terminal 130 may transmit the object-of-computation information over a computer network such as an **IP** network to the classical computer 110 or to a storage medium or storage device accessible to the classical computer 110. Alternatively, the object-of-computation information may be stored on a storage medium or storage device and then passed to the administrator of the classical computer 110 for the administrator to input the object-of-computation information to the classical computer 110 using the storage medium or storage device.

In the exemplary embodiment described above, explanation has been given regarding an example of a case in which the quantum circuit is executed by irradiating an electromagnetic wave. However, there is no limitation thereto, and quantum circuit may be executed using a different method.

Although explanation has been given regarding an example of a case in which the quantum computer 120 executes the quantum computation in the exemplary embodiment described above, there is no limitation thereto. For example, quantum computations may be executed by a classical computer that simulates the behavior of a quantum computer.

Although the exemplary embodiments described above assume that the classical computer 110 and the quantum computer 120 are administered by separate organizations, the classical computer 110 and the quantum computer 120 may be administered as one by the same organization. In such cases, there is no longer a need to transmit quantum computation information from the classical computer 110 to the quantum computer 120, or to transmit measurement results from the quantum computer 120 to the classical computer 110. Moreover, in such cases the role of the classical computer 110 in the foregoing explanation may be thought of as being performed by the control device 121 of the quantum computer 120.

Note that in the foregoing exemplary embodiments described in the present specification, unless the word "solely" is used, as in "based solely on xx", "according solely to xx", or "solely in the case of xx", the present specification should be taken as considering also other additional information that may be anticipated. For example, wording such as "in the case of a, then b" should not be taken as meaning "b is always be true in the case of a", unless clearly stated as such.

Note that although the foregoing exemplary embodiments employs expressions such as "optimize" and "optimized parameters", expressions relating to "optimization" refer to approaching an optimal state. Accordingly, when attempting to obtain parameters so as to minimize a given function, the parameters obtained from optimizing the function are to be understood to not only be the parameters so as to achieve a global solution so as to minimize the function but also to include cases a local solution thereto.

Moreover, even if there is an aspect in which an operation different to the operations described in the present specification is performed in a method, program, terminal, device, server, or system (hereafter "method or the like"), each of the embodiments of the technology disclosed herein concern operations the same as one of the operations described in the present specification, and the presence of an operation different to the operations described in the present specification does not cause the method or the like to fall outside the scope of the embodiments of the technology disclosed herein.

Although explanation has been given in the present specification regarding exemplary embodiments in which a program is pre-installed, such a program may be provided stored on a computer-readable recording medium.

The processing executed by the CPU reading software (a program) in the exemplary embodiments described above may be executed by various types of processor other than a CPU. Such processors include programmable logic devices (PLD) that allow circuit configurations to be modified post-manufacture, such as a field-programmable gate array (FPGA), and dedicated electric circuits, these being processors including a circuit configuration custom-designed to execute specific processing, such as an application specific integrated circuit (ASIC). The processing may be executed by any one of these various types of processor, or may be executed by a combination of two or more of the same type or different types of processor (such as plural FPGAs, or a combination of a CPU and an FPGA). The hardware structure of these various types of processors is more specifically an electric circuit combining circuit elements such as semiconductor elements.

Moreover, although in the exemplary embodiments described above explanation has been given regarding a mode in which a program is stored (installed) in advance in storage, there is no limitation thereto. A program may be provided in a format stored on a non-transitory storage medium such as compact disk read only memory (CD-ROM), digital versatile disk read only memory (DVD-ROM), or universal serial bus (USB) memory. Alternatively, a program may be configured in a format downloadable from an external device over a network.

The respective processing of the present exemplary embodiments may be performed by a configuration of a computer, server, or the like including a generic computation processing device and storage device, with the respective processing being executed by a program. Such a program may be stored in the storage device, provided recorded on a recording medium such as a magnetic disk, an optical disk, or semiconductor memory, or provided over a network. Obviously any other configuration elements are also not limited to implementation by a single computer or server, and they may be distributed between plural computers connected together over a network and implemented thereon.

The configuration elements of the hybrid system of the present exemplary embodiment are not limited to implementation by a single computer or server, and they may be implemented distributed between plural computers connected together over a network.

For example, the processing executed by the classical computer in the respective exemplary embodiments described above may be configured as processing distributed between and performed by plural classical computers connected over a network. Alternatively, for example, the processing executed by the quantum computer in the respective exemplary embodiments described above may be distributed between and performed by plural quantum computers connected over a network. In such cases the hybrid system is configured by at least one or more classical computer and by at least one or more quantum computer.

For example, in cases in which a hybrid system is configured by plural classical computers and by plural quantum computers, one or more quantum computer from out of the plural quantum computers acquires the measurement results of quantum measurement by executing quantum measurement plural times based on the information related to the quantum circuit structure, and transmits the measurement results to the classical computers. Then the one or more classical computer from out of the plural classical computers receives the measurement result and selects the R individual measurement values from the measurement results. The one or more classical computers from out of the plural classical computers generate an effective Hamiltonian based on the Hamiltonian H of the system to be computed and on the selected R individual measurement values, and computes the ground state of the Hamiltonian H and the ground state energy of the Hamiltonian H by diagonalizing the matrix representing the effective Hamiltonian.

All publications, patent applications and technical standards mentioned in the present specification are incorporated by reference in the present specification to the same extent as if each individual publication, patent application, or technical standard was specifically and individually indicated to be incorporated by reference.

**Claims**

1. A quantum information processing method to be executed by a classical computer in a hybrid system including the classical computer and a quantum computer, the method comprising:

   the quantum computer executing quantum measurement a plurality of times based on information related to a quantum circuit structure so as to acquire measurement results of the quantum measurement, and transmitting the measurement results to the classical computer; the classical computer receiving the measurement results and selecting R individual measurement values from the measurement results; and the classical computer generating an effective Hamiltonian based on a Hamiltonian H of a system to be computed and on the selected R individual measurement values, and computing a ground state of the Hamiltonian H and a ground state energy of the Hamiltonian H by diagonalizing a matrix representing the effective Hamiltonian.

2. A quantum information processing method to be executed by a classical computer in a hybrid system including the classical computer and a quantum computer, the method comprising:

   the quantum computer executing quantum measurement a plurality of times for each of $N_s$ individual states so as to acquire measurement results of the quantum measurement and transmitting the measurement results of each of the $N_s$ individual states to the classical computer; the classical computer receiving the measurement results for each of the $N_s$ individual states and selecting $R_i$ ($i = 1, ..., N_s$) individual measurement values from the measurement results for each of the $N_s$ individual states; and the classical computer generating an effective Hamiltonian for each of the $N_s$ individual states based on a Hamiltonian H of a system to be computed and on the selected $R_i$ individual measurement values, and computing an $i^{th}$ eigenstate of the Hamiltonian H and an $i^{th}$ eigenstate energy of the Hamiltonian H by diagonalizing a matrix representing the effective Hamiltonian.

3. A quantum information processing method to be executed by a classical computer in a hybrid system including the classical computer and a quantum computer, the method comprising:

   the quantum computer executing quantum measurement a plurality of times for each of M individual states so as to acquire measurement results of the quantum measurement and transmitting the measurement results of each of the M individual states to the classical computer; the classical computer receiving the measurement results for each of the M individual states and selecting R individual measurement values from the measurement results; and the classical computer generating an effective Hamiltonian based on a Hamiltonian H of a system to be computed and on the selected R individual measurement values, and computing a $1^{st}$ to an $N_s^{th}$ eigenstate of the Hamiltonian H and a $1^{st}$ to an $N_s^{th}$ eigenstate energy of the Hamiltonian H by diagonalizing a matrix representing the effective Hamiltonian.

4. The quantum information processing method of claim 2, wherein, when computing the $i^{th}$ eigenstate of the Hamiltonian H and the $i^{th}$ eigenstate energy of the Hamiltonian H, the classical computer adds a cross product between eigenstates for each of the $1^{st}$ to the $i\text{-}1^{th}$ eigenstates to the effective Hamiltonian, so as to compute an $i^{th}$ eigenstate of the Hamiltonian H and an $i^{th}$ eigenstate energy of the Hamiltonian H.

5. The quantum information processing method of any one of claim 1 to claim 4, wherein, when selecting R individual or $R_i$ individual measurement values, the classical computer:

   detects errors contained in the measurement result, and selects the R individual or the $R_i$ individual measurement values from measurement values for which an error had not been detected.

6. The quantum information processing method of any one of claim 1 to claim 4, wherein, when selecting R individual or $R_i$ individual measurement values, the classical computer:

   selects the R individual or the $R_i$ individual measurement values with a largest number of appearances, or selects the R individual or the $R_i$ individual measurement values having a number of appearances of a specific value or greater.

7. The quantum information processing method of any one of claim 1 to claim 4, wherein, when generating the effective Hamiltonian, the classical computer generates the effective Hamiltonian after adding a specific penalty term to the Hamiltonian H.

8. A quantum information processing program that causes processing to be executed by a classical computer in a hybrid system including the classical computer and a quantum computer, the processing comprising:

the quantum computer executing quantum measurement a plurality of times based on information related to a quantum circuit structure so as to acquire measurement results of the quantum measurement and transmitting the measurement results to the classical computer;
the classical computer receiving the measurement results and selecting from the measurement results R individual measurement values with a largest number of appearances or selecting R individual measurement values having a number of appearances of a specific value or greater; and
the classical computer generating an effective Hamiltonian based on a Hamiltonian H of a system to be computed and on the selected R individual measurement values, and computing a ground state of the Hamiltonian H and a ground state energy of the Hamiltonian H by diagonalizing a matrix representing the effective Hamiltonian.

9. A classical computer in a hybrid system including the classical computer and a quantum computer, wherein:

the quantum computer executes quantum measurement a plurality of times based on information related to a quantum circuit structure so as to acquire measurement results of the quantum measurement and transmits the measurement results to the classical computer;
the classical computer receives the measurement results and selects from the measurement results R individual measurement values with a largest number of appearances or selects the R individual measurement values having a number of appearances of a specific value or greater; and
the classical computer generates an effective Hamiltonian based on a Hamiltonian H of a system to be computed and on the selected R individual measurement values, and computes a ground state of the Hamiltonian H and a ground state energy of the Hamiltonian H by diagonalizing a matrix representing the effective Hamiltonian.

10. A hybrid system including a classical computer and a quantum computer, wherein:

the quantum computer executes quantum measurement a plurality of times based on information related to a quantum circuit structure so as to acquire measurement results of the quantum measurement, and transmits the measurement results to the classical computer;
the classical computer receives the measurement results and selects R individual measurement values from the measurement results; and
the classical computer generates an effective Hamiltonian based on a Hamiltonian H of a system to be computed and on the selected R individual measurement values, and computes a ground state of the Hamiltonian H and a ground state energy of the Hamiltonian H by diagonalizing a matrix representing the effective Hamiltonian.

11. A hybrid system including a plurality of classical computers and a plurality of quantum computers, wherein:

one or more quantum computers of the plurality of quantum computers executes quantum measurement a plurality of times based on information related to a quantum circuit structure so as to acquire measurement results of the quantum measurement, and transmits the measurement results to the classical computer;
one or more classical computers of the plurality of classical computers receives the measurement results and selects R individual measurement values from the measurement results; and
the one or more classical computers of the plurality of classical computers generates an effective Hamiltonian based on a Hamiltonian H of a system to be computed and on the selected R individual measurement values, and computes a ground state of the Hamiltonian H and a ground state energy of the Hamiltonian H by diagonalizing a matrix representing the effective Hamiltonian.

FIG.1

FIG.2

**FIG.3**

**130**
USER TERMINAL

**CLASSICAL COMPUTER** 110

**120**
QUANTUM COMPUTER

S100 — TRANSMIT OBJECT-OF-COMPUTATION INFORMATION AND COMPUTATION METHOD INFORMATION

S102 — DETERMINE STRUCTURE OF QUANTUM CIRCUIT U AND MEASUREMENT SHOT NUMBER

S104 — TRANSMIT VARIOUS INFORMATION NEEDED FOR COMPUTATION

S106 — RECEIVE VARIOUS INFORMATION

S108 — EXECUTE QUANTUM MEASUREMENT

S110 — TRANSMIT MEASUREMENT RESULTS

S112 — SELECT R INDIVIDUAL MEASUREMENT RESULTS

S114 — GENERATE EFFECTIVE HAMILTONIAN

S116 — COMPUTE GROUND STATE AND GROUND STATE ENERGY

S118 — COMPUTE PHYSICAL QUANTITY OTHER THAN ENERGY

S120 — TRANSMIT MEASUREMENT RESULTS

S122 — ACQUIRE MEASUREMENT RESULTS

17

# FIG.4

**USER TERMINAL** ~130

**CLASSICAL COMPUTER** ~110

**QUANTUM COMPUTER** ~120

S200 — TRANSMIT OBJECT-OF-COMPUTATION INFORMATION AND COMPUTATION METHOD INFORMATION

S202 — DETERMINE STRUCTURE OF QUANTUM CIRCUIT U AND MEASUREMENT SHOT NUMBER

TRANSMIT VARIOUS INFORMATION NEEDED FOR COMPUTATION — S204

S206 — RECEIVE VARIOUS INFORMATION

S208 — EXECUTE QUANTUM MEASUREMENT

S210 — TRANSMIT MEASUREMENT RESULTS

S212 — SELECT $R_i$ ($i = 1, 2, 3, \cdots, N_s$) RESPECTIVE INDIVIDUAL MEASUREMENT RESULTS FOR $N_s$ INDIVIDUAL STATES

S214 — GENERATE EFFECTIVE HAMILTONIAN FOR EACH OF $N_s$ INDIVIDUAL STATES IN RISING SEQUENCE OF ENERGY (ADD CROSS PRODUCT BASED ON MEASUREMENT RESULTS OF EIGEN STATES OF LOWER ENERGY)

S216 — COMPUTE EACH EIGEN STATE AND EACH EIGEN STATE ENERGY

S218 — COMPUTE PHYSICAL QUANTITY OTHER THAN ENERGY

S220 — TRANSMIT MEASUREMENT RESULTS

S222 — ACQUIRE MEASUREMENT RESULTS

# FIG.5

USER TERMINAL ~130

CLASSICAL COMPUTER ~110

QUANTUM COMPUTER ~120

S300

TRANSMIT OBJECT-OF-COMPUTATION INFORMATION AND COMPUTATION METHOD INFORMATION

S302

DETERMINE STRUCTURE OF QUANTUM CIRCUIT U AND MEASUREMENT SHOT NUMBER FOR EACH OF M INDIVIDUAL STATES

TRANSMIT VARIOUS INFORMATION NEEDED FOR COMPUTATION

S304

S306 — RECEIVE VARIOUS INFORMATION

S308 — EXECUTE QUANTUM MEASUREMENT

S310 — TRANSMIT MEASUREMENT RESULTS

S312 — SELECT R INDIVIDUAL MEASUREMENT RESULTS

S314 — GENERATE EFFECTIVE HAMILTONIAN

S316 — COMPUTE EACH EIGEN STATE AND EACH EIGEN ENERGY

S318 — COMPUTE PHYSICAL QUANTITY OTHER THAN ENERGY

S320 — TRANSMIT MEASUREMENT RESULTS

S322

ACQUIRE MEASUREMENT RESULTS

# FIG.6

Energy STD for CASCI statevector (average of 10 trials)

# FIG.7

Config
Molecule: H20
CAS: CAS(6e,5o)
ansatz: SPR
n_qubits: 10
depth: 10

# FIG.8

noisy simulator, w/o post-selection

Legend:
- ⋯○⋯ R=1
- —■— R=4
- —▲— R=16
- —●— R=27
- —— statevector
- — — CISD(R=27)

----- Config -----
Molecule: H4
CAS: CAS(4e,4o)
ansatz: Ry Ansatz
n_qubits: 8
depth: 8

# FIG.9

noisy simulator, w/ post-selection

Legend:
- ····○···· R=1
- – –■– – R=4
- ——▲– R=16
- ——●—— R=27
- ——— statevector
- — — CISD(R=27)

----- Config -----
Molecule: H4
CAS: CAS(4e,4o)
ansatz: Ry Ansatz
n_qubits: 8
depth: 8

# FIG.10

H12 (d=1.5)

| | |
|---|---|
| **INTERNATIONAL SEARCH REPORT** | International application No.<br>**PCT/JP2022/026735** |

| | |
|---|---|
| **A.** **CLASSIFICATION OF SUBJECT MATTER**<br>*G06N 10/20*(2022.01)i<br>FI: G06N10/20 | |
| According to International Patent Classification (IPC) or to both national classification and IPC | |

**B.** **FIELDS SEARCHED**

Minimum documentation searched (classification system followed by classification symbols)

G06N10/00-10/80

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.** **DOCUMENTS CONSIDERED TO BE RELEVANT**

| Category* | Citation of document, with indication, where appropriate, of the relevant passages | Relevant to claim No. |
|---|---|---|
| A | JP 2022-29348 A (QUNASYS INC.) 17 February 2022 (2022-02-17)<br>paragraphs [0031], [0032], [0085]-[0088], fig. 1, 4 | 1-11 |
| A | JP 2019-537129 A (GOOGLE LLC) 19 December 2019 (2019-12-19)<br>entire text, all drawings | 1-11 |
| A | JP 7-176763 A (SONY CORP.) 14 July 1995 (1995-07-14)<br>paragraph [0030] | 1-11 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 September 2022** | **04 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<div align="center">

**INTERNATIONAL SEARCH REPORT**
**Information on patent family members**

</div>

International application No.

**PCT/JP2022/026735**

| Patent document cited in search report | | | Publication date (day/month/year) | Patent family member(s) | | | Publication date (day/month/year) |
|---|---|---|---|---|---|---|---|
| JP | 2022-29348 | A | 17 February 2022 | US | 2022/0044141 | A1 | |
| | | | | paragraphs [0022], [0023], [0068]-[0071], fig. 1, 4 | | | |
| JP | 2019-537129 | A | 19 December 2019 | US | 2020/0065439 | A1 | |
| | | | | entire text, all drawings | | | |
| | | | | WO | 2018/080553 | A1 | |
| | | | | EP | 3526738 | A1 | |
| | | | | CA | 3041610 | A1 | |
| | | | | AU | 2016427834 | C1 | |
| | | | | CN | 110023966 | A | |
| JP | 7-176763 | A | 14 July 1995 | US | 5608231 | A | |
| | | | | 6th paragraph, lines 23-42 | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PERUZZO, A.** ; **MCCLEAN, J.** ; **SHADBOLT, P. et al.** A variational eigenvalue solver on a photonic quantum processor. *Nat Commun*, 2014, vol. 5, 4213
- **C. DAVID SHERRILL** ; **HENRY F. SCHAEFER III**. The Configuration Interaction Method: Advances in Highly Correlated Approaches. *Advances in Quantum Chemistry*, 1999, vol. 34, 143-269

- **NORM M. TUBMAN** ; **C. DANIEL FREEMAN** ; **DANIEL S. LEVINE** ; **DIPTARKA HAIT** ; **MARTIN HEAD-GORDON** ; **K. BIRGITTA WHALEY**. Modern Approaches to Exact Diagonalization and Selected Configuration Interaction with the Adaptive Sampling CI Method. *J. Chem. Theory Comput.*, 11 March 2020, vol. 16 (4), 2139-2159, https://pubs.acs.org/-doi/10.1021/acs.jctc.8b00536